**Europäisches Patentamt**

**European Patent Office**

**Office européen des brevets**

(11) Publication number: **0 193 696**
**B1**

# (12) EUROPEAN PATENT SPECIFICATION

(45) Date of publication of patent specification: **06.06.90**

(51) Int. Cl.⁵: **E 06 B 9/56**

(21) Application number: **85830202.9**

(22) Date of filing: **26.07.85**

(54) Device able to permit the manoeuvre of ropes for roller shades or the like.

(30) Priority: **05.03.85 IT 478485 u**

(43) Date of publication of application:
**10.09.86 Bulletin 86/37**

(45) Publication of the grant of the patent:
**06.06.90 Bulletin 90/23**

(84) Designated Contracting States:
**AT BE CH DE FR GB LI LU NL SE**

(56) References cited:
**GB-A-1 230 707**

(73) Proprietor: **SUNCOVER s.r.l.**
**Via Due Agosto, 13**
**I-40016 S. Giorgio di Piano (Bo) (IT)**

(72) Inventor: **Tedeschi, Giovanni**
**Via Vivaldi, 15**
**I-40050 Funo di Argelato (Bo) (IT)**

(74) Representative: **Rinaldi, Carlo**
**c.o. Studio Brevetti Nazionali ed Esteri dell'Ing.**
**Carlo Rinaldi & C. s.d.f. Piazza di Porta**
**Castiglione, 16**
**I-40136 Bologna (IT)**

Courier Press, Leamington Spa, England.

## Description

The invention relates to a device able to permit the manoeuvre of ropes for roller shades, Venetian or spring blinds.

At present it is important to be able to raise or to lower a blind of the abovementioned kind or to place it at a desired height by operating one or more manoeuvering ropes.

Two kinds of devices permit such an operation: a first kind is constituted by a simple element, substantially cylindrical, which is fixed on the frame of a blind or near it and fitted with a rope race in which said ropes are wound after the blind has been raised or lowered, to prevent them from becoming unhooked and causing the lowering of the blinds; a second kind is constituted by engaging means, which permit the unhooking of the ropes in determined stretches and direction of the same.

The first kind of device, although very simple, does not avoid, absolutely, the unhooking of the ropes. The second kind of device involves a difficult manoeuvre to raise or lower the blind, particularly when the frame is near a wall. Furthermore, this manoeuvre can endanger the integrity of the ropes which, as a result, will have to be periodically changed.

GB—A—1 230 707 relates to a device for operating a Venetian blind and includes two different mechanisms: the first one is a slat-tilting mechanism; the second one serves to lower the blind. The second mechanism is a cord brake adapted to stop two cords at a desired position. By releasing the cord brake, the blind is lowered. The cord brake comprises a movable conical element with a protruding hand-grip at its lower end and a rod with a disc at its upper end and a fixed conical member secured to the lower end of the cord brake by a housing.

The fixed element has a bore which mates substantially the external configuration of the movable element.

The housing is fixedly connected to an elongated tubular member by means of a part of the brake. The cords pass through openings made in the disc, enter a union between the tubular member and the housing, the rod, the bore of the fixed element and then pass holes made in the hand-grip. A spring, mounted between the disc and the upper end of the fixed element, urges the rod, and so the movable element with respect to the fixed element, upward.

By pulling the hand-grip downwardly, the conical walls are spaced further from each other and the cords, under the weight of the slats, can move upwards. When, however, the cords are pulled downwardly, the movable element is moved downward and the cords can move downwards, and thus effect raising of the blind.

GB—A—1 230 707 teaches another embodiment of the cord brake in which use has been made of a lever having a pivot and a toothed end; a spring urges the lever to rotate until the toothed end urges the cords to be clamped against a stopping wall. By pressing a button inwardly, the lever is rotated and the cord may be freely pulled down.

The problems inherent to the first kind of cord brake are due to constructive, assembly and installation difficulties.

To achieve a correct distribution of the specific pressures on the cords, it is necessary that the taper ratios of the fixed and movable elements are equal within strict tolerance limits. A small difference in the taper ratios has as a result the concentration of pressures in a small part of the cords, if the two conical walls reach each other in a small truncated cone-shaped zone, or the absolute absence of pressures if said walls do by no means reach each other.

In addition, it is necessary that the bore for the rod guides correctly the rod to prevent formation of preferential contact zones between the two conical walls, this having as a result an incorrect control of the cords. If, in fact, the thrust of the spring causes a misaligned movement of the movable element with respect to the fixed element, the cords are clamped with varying specific pressures and, as a consequence, not always with the same intensity.

The second kind of cord brake has the disadvantage of a high concentration of the specific pressures in the toothed zone.

More grave are the assembly problems. The cord brake of the first kind must be assembled by keeping into consideration, in particular, the fact that the spring could interfere with the cords thus causing undesired stop of the cords. It is therefore necessary to bore the thrust bearing disc to obtain a passage for the cords sufficiently far from the turns of the spring.

This precaution does not assure, absolutely, against the interference because, if for any reason, the cords release too much, they can, all the same, interfere with the spring.

The assembly is carried out in successive steps, beginning with a pre-assembly of the movable and fixed elements and of the spring; it follows the insertion, by using the above precaution, of the cords in said bores and the final installation of the device. Also the installation of this device, both of the first and of the second kind, on a frame of a window or near it, may be obtained only by using brackets embracing the housing or, as taught in GB—A—1 230 707, by a tubular element.

The invention, as claimed, remedies these drawbacks. It solves the problem by creating a device able to permit the manoeuvre of ropes for roller shades or the like by which it is possible to obtain engagement of the manoeuvering ropes of the blinds by means of a slider subjected to an elastic force provided by a spring in order to maintain a blind in a predetermined position and to obtain the disengagement of the same ropes to raise or lower a blind, by a manual force applied to said slider by a button or a tension rod.

Said slider is housed in a guide body, crossed by a first through hole; a second through hole crosses said slider; said first and second holes being adapted to be disposed at a first position in which their axes are coincident, and at a second position in which their axes are parallel to each other. As a result, a correct and constant distribution of the specific pressures for clamping the ropes is obtained.

The constance in the distribution of the specific pressures may be achieved by a first and a second planar surface formed at an inner end of the guide body and at the end of the slider which faces said first planar surface, respectively; said guide body having a through hole in which a rope is inserted, and on which urges a spring to clamp said rope between said first and said second surfaces.

The advantages offered by the invention are mainly as follows: Lowering the blind is performed simply by manually operating the slider against the action of a spring and the blind is stopped immediately by ceasing the manual operation on the slider; by so doing it is possible to stop the blind in every desired position; the device can be arranged in every part of a blind frame, within easy reach or not. In addition, it can also be arranged outside of the frame, whenever there is a space to house it; by using a device in accordance with the invention, the lowering and the raising of a blind is facilitated. The device is extremely robust and durable.

One way of carrying out the invention is described in detail below with reference to drawings which illustrate preferred but not limiting embodiments.

Fig. 1 shows a device in accordance with the invention in a first embodiment and in a first disengaged position of a manoeuvering rope for a blind.

Fig. 2 represents the device shown in Fig. 1 in a second engaged position of said rope.

Fig. 3 represents a second embodiment of a device in accordance with the invention.

Fig. 4 represents a third embodiment of a device in accordance with the invention.

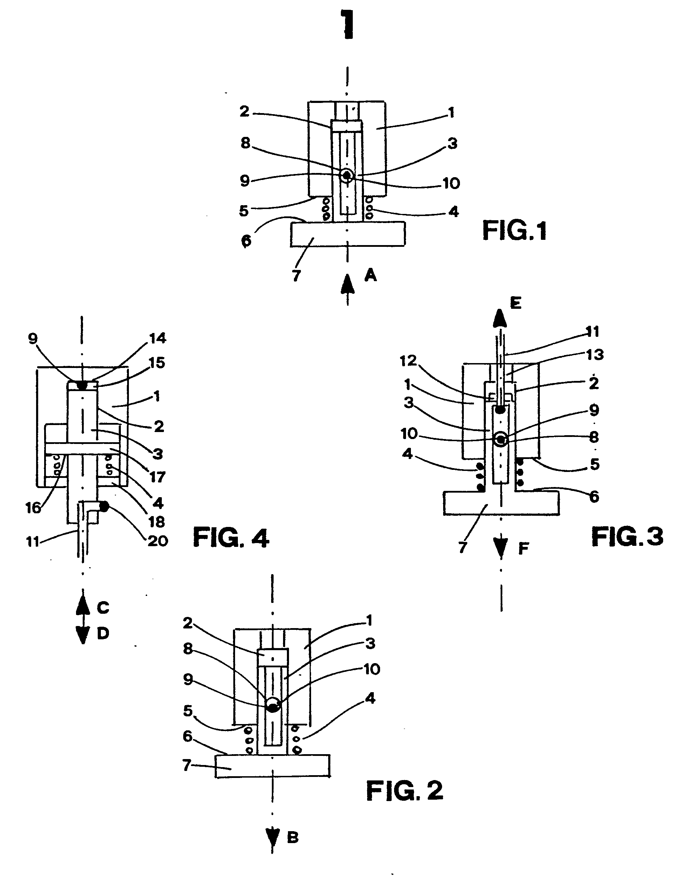

As shown in Figs. 1 and 2, a device in accordance with the invention is substantially constituted by a body 1 adapted to be fixed, by known engaging means, not shown, to a frame supporting a blind of one of the abovementioned kinds, in a position within easy reach for a person who wishes to raise or lower the blind, or near said frame; said body 1 has a slide hole 2 for a slider 3, able to translate from a first position, shown in Fig. 2, under the action of, respectively, an elastic force applied by a spring 4 which acts in the direction B and a manual force, which acts in the direction A; the ends of said spring being disposed between an end wall 5 of said body 1 and a surface 6 of a button 7 integral with said slider 3. Said body 1 is crossed by a hole 8 having a first symmetry axis developing in the direction perpendicular to the drawing plane.

A second hole 10, having a second symmetry axis, is formed in the slider 3; the second symmetry axis is parallel to the first axis and has a diameter slightly smaller than that of the hole 8. A manoeuvering rope 9 is inserted in said hole 8 and 10 to raise or lower a blind, not shown.

In operation, when the slider 3 is in the position shown in Fig. 1, the rope is free to slide through holes 8 and 10, therefore, it is possible to move the blind; when it is only desired to lower the blind, it is sufficient to push the slider 3 in the direction A by pressing the button 7. In fact, the spring 4 has a sufficient load to hold the rope steady under the action of the blind when the slider 3 is in the position shown in Fig. 2; but the load is not so high as to avoid the rope to be moved by the muscular force of a person who wishes to raise the blind. In this geometric configuration, the specific pressures clamping rope 9 affect two opposite zones located between the walls of body 1 and of slider 3.

The embodiment shown in Fig. 3 is adapted to be arranged in a position not reachable by a person; therefore, the force moving the slider 3 is provided by a second rope 11, with a first end engaged on a throttling part 12 of an axial hole 13. Said rope 11 has a second end, not shown, at the disposal of the person who wishes to operate it.

Accessories for the embodiment shown in Fig. 3 are driving gears, not shown because they are known, which permit rope 11 to direct the manual efforts in the direction E while the force acting in the direction F is applied by spring 4.

By examining Fig. 3, a man skilled in the art realizes that the functioning shown therein is analogous to the functioning of the device shown in Figs. 1 and 2, apart from the fact that the disengaging force for the rope 9 is, in this case, provided by the efforts transmitted by the rope 11.

The embodiment shown in Fig. 4 comprises a body which has a slide hole 2 ending in a substantially planar surface 14.

In a hole 15, crossing said body 1 in the direction perpendicular to the drawing plane, is inserted a rope 9 on which acts the force of a spring 4 which engages said rope 9 between said surface 14 and a surface 21 delimiting an end of said slider 3; said spring 4 being situated between a first engaging element 17, integral with said slider 3 and a second closing element 18, which closes towards the front said body 1. The closing element 18 is adapted to be arranged on the body 1 by screwing or analogous known ways.

The slider 3 moves toward the direction C under the action of the spring 4 to stop the rope 9 and, in direction D, under the action of a hand, to release said rope; for this the slider 3 has a fastening hole 19, adapted to house a rope 11 which is made displaceable by a hitch 20 to slider 3 and which has an end, not shown, at the disposal of the person who manoeuvres the blind.

The invention as devised, achieves the intended purposes in full; particularly, the invention provides a device able to permit the manoeuvre of ropes for roller shades or the like which, in addition to permit engagement or disengagement of said ropes in order to place or to maintain a blind in a desired position, also permits to control the force acting on the slider.

It is obvious that the invention can be subjected to modifications not affecting its essence; in particular, the rope 11 of Fig. 4 can be replaced by a ring, integral with said slider 3, which permits moving said slider 3 in the direction D.

## Claims

1. Device suited to permit the manoeuvre of ropes of roller shades or the like comprising: a body (1), having mounting means to secure said body (1) to a blind frame or near said frame; a slider (3) adapted to move in a slide bore (2) between a first stopping position for one or more manoeuvering ropes (9) for said blind and a release position for said rope (9) or ropes, under the action of a spring (4) or of a force applied manually to the slider (3), respectively; characterized by the fact that said body (1) has a first through hole (8) with a first symmetry axis and that said slider (3) has a second hole (10) with a second symmetry axis; said first symmetry axis being parallel to said second symmetry axis when said slider (3) is in said first stopping position; said first symmetry axis being coincident with said second symmetry axis when said slider (3) is in said second released position, and where said rope (9) or ropes pass through both holes (8, 10) to be either clamped between the slider (3) and the slide bore (2) by spring action (4) or released by hand.

2. Device, as in claim 1, characterized by the fact that said second hole (10) has a diameter slightly smaller than the diameter of hole (8).

3. Device, as in claim 1, characterized by the fact that said slider (3) has a fastening hole (19) for insertion of a rope (11) which is secured to said slider (3) by a hitch (20); said rope (11) having an end at the disposal of the operator.

4. Device able to permit the manoeuvre of ropes for roller shades or the like comprising: a body (1), having mounting means to secure said body (1) to a blind frame or near said frame; a slider (3) adapted to move in a slide bore (2) between a first stopping position for one or more manoeuvering ropes (9) for said blind and a release position for said rope (9), under the action of a spring (4) or of a force applied manually to the slider (3), respectively; characterized in that said slide bore (2) ends in a planar surface (14); rope (9) is inserted in a through hole (15) formed in said body (1); a spring (4) urges said slider (3) for clamping said rope (9) between said surface (14) and a surface (21) delimiting an end of said slider (3); said spring (4) being placed between an engaging element (17) integral with said slider (3) and a second closing element (18) for the front part of said body (1).

## Patentansprüche

1. Betätigungsvorrichtung für Seile von Rollvorhängen oder dergleichen, die enthält: einen Körper (1), der Befestingungsmittel aufweist, um den Körper (1) an einem Rahmen eines Rollvorhanges oder in der Nähe des Rahmens zu befestigen; einen Schieber (3), der so geeignet ist, daß er sich innerhalb eines Fürhungsrohres (2) von einer ersten Stellung zu einer zweiten Stellung verschiebt; wobei in der ersten Stellung ein oder mehrere Seile (9) durch die Wirkung einer Feder (4) abgedrosselt und in der zweiten Stellung die Seile (9) durch eine auf den Schieber (3) handubersetzte Kraft freigegeben werden, dadurch gekennzeichnet, daß der Körper (1) ein mit einer ersten Symmetrieachse ausgerustetes erstes Durchgangsloch (8) besitzt; daß der Schieber (3) ein mit einer zweiten Symmetrieachse ausgerustetes zweites Loch (10) aufweist; daß die erste Symmetrieachse parallel mit der zweiten Symmetrieachse läuft, wenn sich der Schieber (3) in der ersten Stellung befindet; daß sich die erste Symmetrieachse mit der zweiten Symmetrieachse deckt, wenn sich der Schieber (3) in der zweiten Stellung befindet; wobei die Seile (9) durch die beiden Löcher (8, 10) gehen, um durch die Wirkung der Feder (4) zwischen dem Schieber (3) und dem Fürhungsrohr (2) festgehalten, oder durch Handwirkung freigegeben zu werden.

2. Betätigungsvorrichtung, nach Anspruch 1, dadurch gekennzeichnet, daß das zweite Loch (10) hat einen Durchmesser, der kaum kurzer als der Durchmesser des ersten Loches ist.

3. Betätigungsvorrichtung, nach Anspruch 1, dadurch gekennzeichnet, daß der Schieber (3) ein Befestingungsloch (19) für die Einführung eines Seiles (11) aufweist, welches dem Schieber (3) durch einen Knoten befestigt ist und welches ein Ende besitzt, das dem Betätiger des Rollvorhangs zur Verfügung steht.

4. Betätigungsvorrichtung für Seile von Rollvorhangen oder dergleichen, die enthält: einen Körper (1), der Befestingungsmittel aufweist, um den Körper (1) an einem Rahmen eines Rollvorhanges oder in der Nähe des Rahmens zu befestigen; einen Schieber (3), der so geeignet ist, daß er innerhalb eines Fürhungsrohres (2) von einer ersten Stellung zu einer zweiten Stellung verschiebt; wobei in der ersten Stellung ein oder mehrere Seile (9) durch die Wirkung einer Feder (4) abgedrosselt und in der zweiten Stellung die Seile (9) durch eine auf den Schieber (3) handubersetzte Kraft freigegeben werden, dadurch gekennzeichnet, daß das Fürhungsrohr (2) durch eine Planfläche (14) begrenzt ist; daß ein Seil (9) in einem im Körper (1) ausgeführten Durchgangsloch (15) eingeführt ist, daß eine Feder (4) wirkt auf das Seil (9), so daß die Feder (4) das Seil (9) zwischen der Planfläche (14) und einer den Körper (1) begrenzenden Fläche (21) klemmt; daß die Feder (4) zwischen einem festverbunden am Körper (1) Befestingungsglied (17) und einer den Körper (1) schliessenden Vorderseite (18) angeordnet ist.

## Revendications

1. Dispositif de manoeuvre pour cordons de stores à rouleau du similaires qui comprend: un corps (1), qui est pourvu de moyens à fixer, pour fixer le corps (1) à un châssis d'une store ou près du châssis; un curseur (3) apte à glisser à l'intérieur d'un percement à guider (2) d'une première position d'arrêt pour un ou plusieurs cordons de manoeuvre (9) pour la store à une deuxième position de relâchement pour le cordon (9), à cause, respectivement, de l'action d'un ressort (4) ou d'une force transmise manuellement au curseur (3) caractérisé en ce que le corps (1) a un premier trou (8) avec un premier axe de symétrie, et en ce que le curseur (3) a un deuxième trou (10) avec un deuxième axe de symétrie; le premier axe de symétrie est parallèle au deuxième axe de symétrie, lorsque le curseur (3) se trouve dans la première position d'arrêt; le premier axe de symétrie coincide avec le deuxième axe de symétrie, lorsque le curseur (3) se trouve dans le deuxième position de relâchement, dans laquelle le cordon (9) ou les cordons transversent l'un et l'autre trous (8, 10) pour être ou agrafés entre le curseur (3) et le percement à guider (2) à cause de l'action du ressort (4) ou relâchés par action manuelle.

2. Dispositif, selon la revendication 1, caractérisé en ce que le deuxième trou (10) a un diamètre qui est faiblement plus petit que le diamètre du premier trou (8).

3. Dispositif, selon la revendication 1, caractérisé en ce que le curseur (3) a un trou de fixage (19) pour introduir un cordon (11), qui est rendu amovible par un noeud (20) au curseur (3) et qui a un'extrèmitè à disposition du manoeuvrier de la store.

4. Dispositif de manoeuvre pour cordons de stores à rouleau ou similaires qui comprend: un corps (1), qui est pourvu de moyens à fixer pour fixer le corps (1) à un châssis d'une store ou près du châssis; un curseur (3) apte à glisser à l'intérieur d'un percement à guider (2) d'une première position d'arrêt pour un ou plusieurs cordons de manoeuvre (9) pour la store à une deuxième position de relâchement pour le cordon, à cause, respectivement, de l'action d'un ressort (4) ou d'une force transmise manuellement au curseur (3) caractérisé en ce que le percement à guider (2) a un'extrémité conformée selon une surface plane (14); dans un trou passant (15), qui se trouve dans le corps (1), est introduit un cordon (9), sur lequelle agit la force d'un ressort (4), qui engage le cordon (9) entre la surface (14) et une surface (21), qui délimite un'extrèmité du curseur (3); le ressort (4) se trouve entre un premier élément d'engagement (17), qui est solidaire au curseur (3), et un deuxième élément de fermature (18), qui ferme antérieurement le corps (1).

FIG.1

FIG. 4

FIG.3

FIG. 2